# EUROPÄISCHE PATENTSCHRIFT

(11) **EP 3 810 942 B1**
(45) Veröffentlichungstag und Bekanntmachung des Hinweises auf die Patenterteilung: **05.02.2025**
(21) Anmeldenummer: 19737669.2
(22) Anmeldetag: 21.06.2019
(51) Int. Cl.: F16B 25/00

(54) **SELBSTFURCHENDE SCHRAUBE**
SELF-TAPPING SCREW
VIS AUTO-TARAUDEUSE

(30) Priorität: 21.06.2018 DE 102018114983
(43) Veröffentlichungstag der Anmeldung: 28.04.2021
(73) Patentinhaber: EJOT SE & Co. KG, 57319 Bad Berleburg (DE)
(72) Erfinder: ACHENBACH, Michael, 35236 Breidenbach (DE); BEHLE, Juergen, 57334 Bad Laasphe (DE); BIRKELBACH, Ralf, 57334 Bad Laasphe (DE); DIECKMANN, Volker, 57319 Bad Berleburg (DE); DRATSCHMIDT, Frank, 57319 Bad Berleburg (DE); HACKLER, Jan, 57319 Bad Berleburg (DE); GERBER, René, 35112 Fronhausen (DE); HELLMIG, Ralph J., 57334 Bad Laasphe (DE); SELIMI, Ilir, 35216 Biedenkopf (DE); WEITZEL, Stephan, 57334 Bad Laasphe (DE)
(74) Vertreter: Puschmann Borchert Kaiser Klettner Patentanwälte Partnerschaft mbB
(86) Internationale Anmeldenummer: PCT/EP2019/066533
(87) Internationale Veröffentlichungsnummer: WO 2019/243608

(56) Entgegenhaltungen:
- DE-A1- 102015 120 470
- DE-A1- 102016 109 460
- JP-A- 2001 107 932
- US-A- 3 861 269
- US-B2- 9 581 183

## Beschreibung

Die Erfindung betrifft eine selbstfurchende Schraube gemäß dem Oberbegriff des Anspruchs 1.

In bekannter Weise, wie beispielsweise aus der EP 0948 719 B1 bekannt, umfasst eine Schraube, insbesondere zur Verschraubung in Kunststoff, einen Antrieb und einen gewindetragenden Schaft. Die Schaube umfasst ferner ein Hauptgewinde, wobei das Hauptgewinde einen maximalen Hauptgewindeaußendurchmesser besitzt. Das Hauptgewinde weist einen tragenden und einen furchenden Bereich auf, wobei der furchende Bereich an der Stelle des Gewindegangs endet, an dem das Muttergewinde vollständig hergestellt ist.

Die Schraube weist an ihrem Schaft an ihrem dem Antrieb abgewandten Ende ein Schraubenende auf, wobei das Schraubenende einen Durchmesser von wenigstens 20% des maximalen Hauptgewindeaußendurchmessers besitzt.

Die US 3,861,269 B offenbart eine selbstfurchende und lochbildende Schraube mit einem mehrgängigen Spitzenbereich, damit durch die Schraube ein Loch in den zu verbindenden Bauteilen hergestellt werden kann, wobei ein vereinfachtes Eindringen erlaubt werden soll.

Die JP 2001 107932 A offenbart eine selbstfurchende Schraube mit einem dreigängigen Ansetzgewinde und einem ein- oder zweigängigen Traggewinde, wobei das Traggewinde als eine Fortsetzung des Ansetzgewindes ausgebildet ist.

Es ist Aufgabe der Erfindung eine Schraube anzugeben, deren Einschraubverhalten verbessert ist.

Die Aufgabe wird durch die kennzeichnenden Merkmale des Anspruchs 1 in Verbindung mit seinen Oberbegriffen gelöst.

Die Unteransprüche bilden vorteilhafte Weiterbildungen der Erfindung.

Der Schaft weist im Bereich des Schraubenendes ein Ansetzgewinde auf.

Erfindungsgemäß umfasst das Ansetzgewinde wenigstens drei Ansetzgewindegänge, wobei der Durchmesser des Hauptgewindes im Ansetzbereich kleiner ist als der Durchmesser des Ansetzgewindes. In dieser Ausgestaltung erfüllen lediglich die Ansetzgewindegänge die Zentrierfunktion, wobei das Hauptgewinde erst im Anschluss das Muttergewinde furcht.

Die Ansetzgewindegänge erreichen in ihrem Außendurchmesser höchstens 90% des maximalen Hauptgewindeaußendurchmessers. So ist an der Schraube ein Ansetzbereich gebildet, in welchem die Ansetzgewindegänge den gleichen Durchmesserverlauf aufweisen und zudem im Ansetzbereich der Durchmesser des Hauptgewindes kleiner als der Durchmesser der Ansetzgewindegänge ist.

Dies hat den Vorteil, dass die Ansetzgewindegänge einen schnellen und geraden Ansatz an einem Vorloch in einem Bauteil, insbesondere einem Kunststoffbauteil, ermöglichen, so dass ein dem Furchbereich nachfolgender Tragbereich möglichst genau ausgerichtet ist und so dem durch den Furchbereich vorgefurchte Muttergewinde folgt und dadurch eine geringere Reibung während des Einschraubvorgangs verursacht. Weiter erfindungsgemäß ist vorgesehen, dass sich das Ansetzgewinde höchstens über zwei Windungen erstreckt. Dies sorgt für eine ausreichende Führung, wobei dennoch eine effektive Verschraubung gewährleistet werden kann.

Bevorzugt beginnen die Ansetzgewindegänge im Bereich des Schraubenendes am Kern und erweitern vom Beginn des Kerns ihren Durchmesser stetig. Dies sorgt für eine gleichmäßige und schnelle Zentrierung der Schraube beim Ansetzen.

Insbesondere sind die Gewindegänge mit gleichem Außendurchmesser im Ansetzbereich umfänglich gleichverteilt. Dies unterstützt ebenfalls die Zentrierung der Schraube.

Ferner kann vorgesehen sein, dass der Durchmesser des Schraubenendes wenigstens 30%, wenigstens 40%, wenigstens 50%, wenigstens 60% des Hauptgewindeaußendurchmessers hat. Auf diese Weise wird ein stumpfes Schraubenende geschaffen, so dass nach kurzer Einführdistanz bereits eine Führung durch das Vorloch gegeben ist.

Besonders bevorzugt haben alle Gewindegänge im Ansetzbereich ihren Anfang in derselben Querschnittsebene. Auf diese Weise kann über den gesamten Ansetzbereich eine gleichmäßige Anlage der Gewindegänge im Ansetzbereich gewährleistet werden.

Gemäß einer weiteren vorteilhaften Ausgestaltung können alle Gewindegänge im Ansetzbereich die gleiche Gewindegestaltung, insbesondere das gleiche Gewindeprofil, aufweisen.

Bevorzugt schließt das Ansetzgewinde unmittelbar ans Schraubenende an. Dadurch kann schnell eine Zentrierfunktion ermöglicht werden.

Alternativ kann das Ansetzgewinde beabstandet zum Schraubenende beginnen. Auf diese Weise kann der Bereich zum Schraubenende hin eine Suchfunktion erfüllen.

Die Ansetzgewinde und das Hauptgewinde können gewalzte Gewinde sein, wodurch eine kostengünstige Herstellung ermöglicht wird.

Das Ansetzgewinde und das Hauptgewinde können im Ansetzbereich einen Flankenwinkel aufweisen, der stumpfer ist als der Flankenwinkel des Hauptgewindes außerhalb des Ansetzbereichs. Dadurch kann der Zentrierfunktion des Ansetzbereichs und der Furchfunktion des Hauptgewindes spezifisch Rechnung getragen werden.

Nachdem das Ansetzgewinde seinen maximalen Außendurchmesser erreicht hat, kann dieses abrupt auslaufen. Dies reduziert die Reibung insbesondere beim Einschrauben in ein enges Vorloch.

Gemäß der Erfindung können auch Unterbrechungen der Gewindegänge vorliegen, wobei der interpolierte Verlauf des Gewindeaußendurchmessers gleichbleibt.

Das Eindrehmoment kann erfindungsgemäß weiter dadurch verringert werden, dass der maximale Hauptgewindeaußendurchmesser im Furchbereich liegt, wobei zudem der Außendurchmesser im Tragbereich geringer ist. Dies führt dazu, dass die dem Furchbereich nachfolgenden Windungen des Tragbereichs in ein geringfügig größer gefurchtes Muttergewinde eingeschraubt werden, wodurch die Reibung der Gewindegänge reduziert wird. Dies wirkt sich insbesondere positiv beim Einschrauben in Kunststoff aus.

Bevorzugt ist das Gewindequerschnittsprofil im Bereich des maximalen Hauptgewindeaußendurchmessers wenigstens in seinem radial äußeren Bereich des Gewindequerschnittsprofils größer als das Gewindequerschnittsprofil im Tragbereich in diesem Bereich. Der radial äußere Bereich liegt etwa bei 85% des maximalen Hauptgewindedurchmessers.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Zeichnung bedeutet:
- Fig. 1: eine Seitenansicht, einer nicht erfindungsgemäßen Schraube;
- Fig. 2: einen Querschnitt B-B durch den Schraubenschaft im Ansetzbereich gemäß Fig.1;
- Fig. 3: eine Seitenansicht einer erfindungsgemäßen Schraube mit drei Ansetzgewindegängen;
- Fig. 4a: einen Querschnitt A-A durch den Schraubenschaft im Ansetzbereich gemäß Fig. 3;
- Fig. 4b: einen Querschnitt B-B durch den Schraubenschaft im Ansetzbereich gemäß Fig. 3;
- Fig. 5: ein Vergleich der Gewindeprofilkontur im Formbereich und einer Gewindeprofilkontur im Tragbereich des Hauptgewindes.

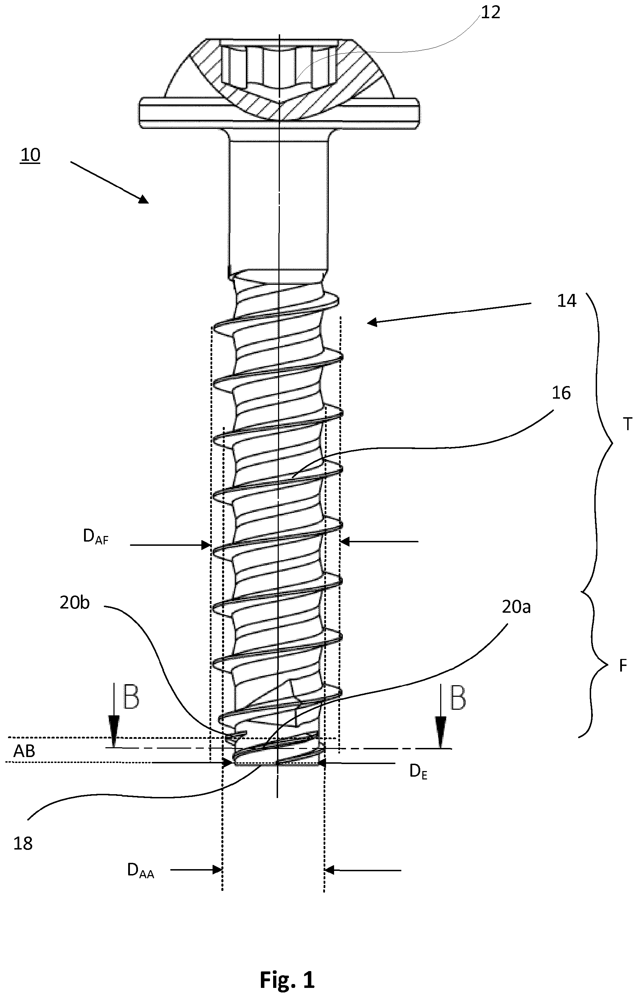

Fig. 1 zeigt eine nicht erfindungsgemäße selbstfurchende Schraube 10 mit einem Schaft 14 und einem Antrieb 12. Der gewindetragende Schaft 14 trägt ein Hauptgewinde 16, das einen Furchbereich F und einen Tragbereich T aufweist. Der Furchbereich F endet an der Stelle des Hauptgewindes 16, an der das vollständige Muttergewinde hergestellt ist, wonach der Tragbereich T folgt. Dies ist nach etwa zwei Windungen des Hauptgewindes 16 ausgehend vom freien Ende der Schraube 18 der Fall.

In diesem Beispiel sind der Furchbereich F und der Tragbereich T Teile des gleichen Gewindegangs, so dass sich kein gegenständlicher Übergang zwischen dem Tragbereich T und dem Furchbereich F ergibt. An dem dem Antrieb gegenüberliegenden Ende der Schraube, also der "Spitze", ist ein Ansetzbereich AB vorgesehen. Der Ansetzbereich AB wird im vorliegenden Beispiel dadurch gebildet, dass zwei Ansetzgewindegänge 20a, 20b sich unmittelbar am Schraubenende 18 ausgehend vom Schraubenkern erheben und in Richtung des Antriebs 12 ihren Durchmesser D_{AA}, bis zum Ende des Ansetzbereichs AB stetig erweitern. Die Ansetzgewindegänge 20a, 20b weisen am Ende des Ansetzbereichs AB ihren maximalen Außendurchmesser D_{AA} auf. Dieser beträgt weniger als 90% des Durchmessers D_{AF} des Hauptgewindes 18. Entsprechend kann eine Beeinträchtigung der Halteeigenschaften durch das Ansetzgewinde 20 vermieden werden und dennoch ein zentriertes und gerades Ansetzen der Schraube 10 gefördert werden. Das Hauptgewinde 16 verläuft im Ansetzbereich AB gleich mit den Ansetzgewindegängen 20a, 20b.

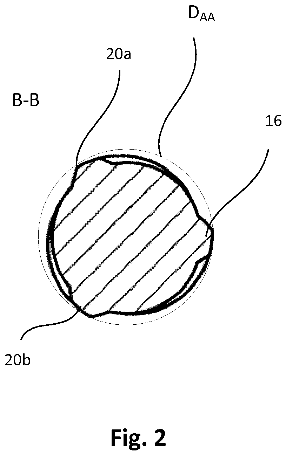

Fig. 2 zeigt einen Querschnitt B-B etwa in der Mitte des Ansetzbereichs AB. Der Querschnitt zeigt die Ansetzgewindegänge 20a, 20b und den Hauptgewindegang 16. Alle Gewindegänge weisen an der Stelle den gleichen Durchmesser D_{AA} auf. Der Durchmesser D_{AA} vergrößert sich ausgehend vom Schraubenende in Richtung des Antriebs stetig, wobei der Durchmesser aber in jeder Querschnittsebene im Ansetzbereich AB gleich ist.

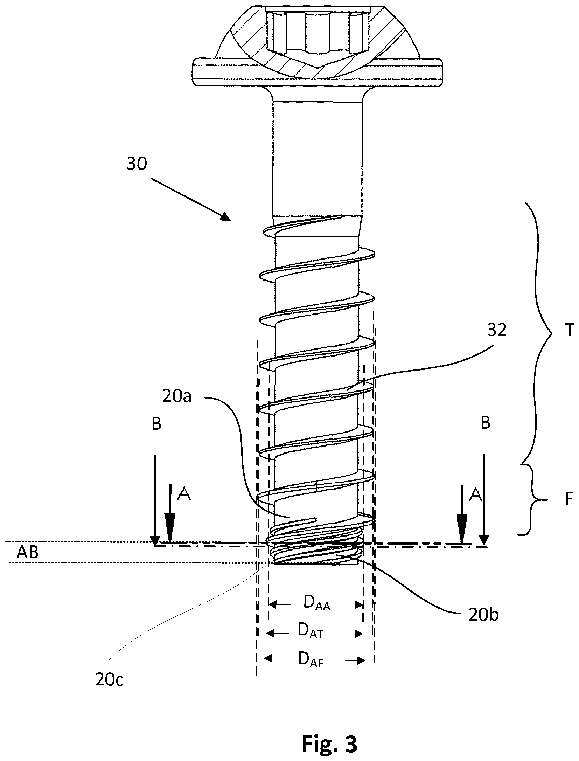

Fig. 3 zeigt eine Seitenansicht einer erfindungsgemäßen Schraube, wobei drei Ansetzgewinde 20a, 20b, 20c vorgesehen sind und das Hauptgewinde 32 im Ansetzbereich AB einen geringeren Durchmesser aufweist als die Ansetzgewinde 20a, 20b, 20c.

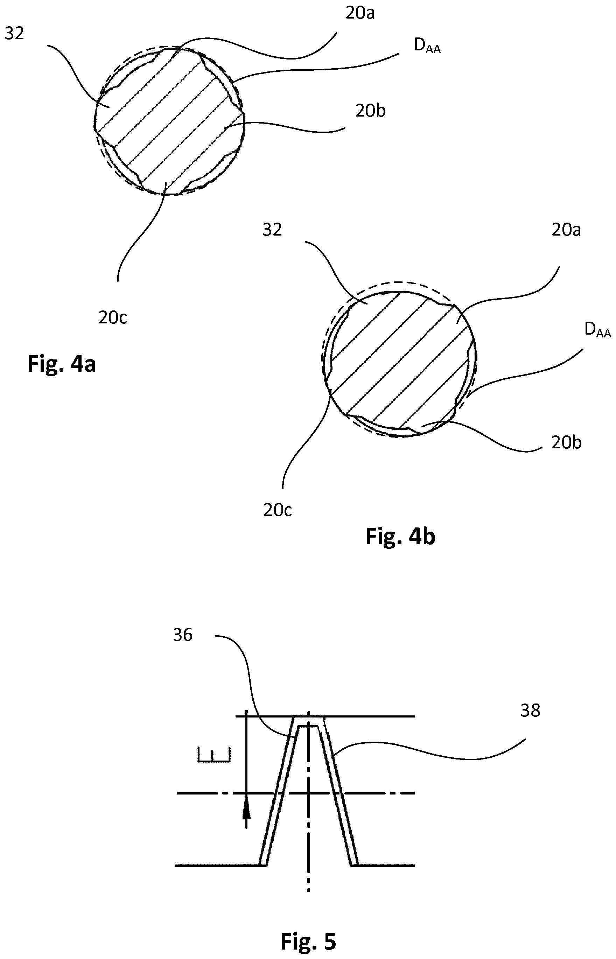

Das Hauptgewinde 32 beginnt also im Ansetzbereich AB zwischen den Ansetzgewindegängen 20a, 20b, 20c und steigt in seinem Durchmesser derart an, dass es am Ende des Ansetzbereichs AB den Durchmesser der Ansetzgewindegänge 20a, 20b, 20c erreicht. Ab dem Ende des Ansetzbereichs AB läuft das Ansetzgewinde 20 aus und das Hauptgewinde 32 erstreckt sich weiter entlang des Schafts. Die Durchmesser der Gewindegänge sind in den Querschnitten A-A in Fig. 4a für das Ende des Ansetzbereichs AB und für den Querschnitt B-B des Schafts in Fig. 4b dargestellt.

Ferner weist der Hauptgewindegang 32 im Anschluss an den Ansetzbereich AB in Richtung des Kopfes einen Furchbereich F und einen Tragbereich T auf.

Der maximale Hauptgewindeaußendurchmesser D_{AF} liegt im Formbereich F, wonach nach dem Formbereich F das Muttergewinde hergestellt ist. Der dem Formbereich in Richtung des Antriebs nachfolgende Tragbereich T weist einen Außendurchmesser D_{AT} auf, der geringer ist als der maximale Hauptgewindeaußendurchmesser D_{AF}. Dadurch wird die Reibung für den dem Furchbereich F nachfolgenden Tragbereich T beim Einschraubvorgang reduziert. Insoweit ergibt sich ein geringes Einschraubmoment.

Es versteht sich, dass die Erfindung sich auch auf Schrauben bezieht, die einen gemäß Fig. 1 ausgebildeten Formbereich F und einen gemäß Fig. 3 ausgestaltetes Hauptgewinde 32 mit einem im Formbereich F liegenden maximalen Hauptgewindeaußendurchmesser D_{AF} und einen geringeren Außendurchmesser D_{AT} im Tragbereich aufweisen.

Fig 4a zeigt einen Querschnitt A-A durch den Schraubenschaft am Ende des Ansetzbereichs AB. Alle Gewinde weisen an dieser Position den gleichen Außendurchmesser D_{AA} auf.

Fig. 4b zeigt einen Querschnitt B-B etwa in der Mitte des Ansetzbereichs AB. Der Hauptgewindegang 32 liegt hier deutlich erkennbar innerhalb des durch die Ansetzgewindegänge 20a, 20b, 20c definierten Außendurchmessers D_{AA}.

Fig. 5 zeigt einen Vergleich der Gewindeprofilkontur im Formbereich und einer Gewindeprofilkontur im Tragbereich des Hauptgewindes. Fig. 5 zeigt weiter, dass das Gewindequerschnittsprofil 38 im Bereich des maximalen Hauptgewindeaußendurchmessers D_{AF} wenigstens in seinem radial äußeren Bereich E des Gewindequerschnittsprofils größer ist als das Gewindequerschnittsprofil 36 im Tragbereich T in diesem Bereich E.

## Patentansprüche

1. Selbstfurchende Schraube (10, 30) umfassend einen Antrieb (12) und einen gewindetragenden Schaft (14) umfassend ein Hauptgewinde (16, 32), wobei das Hauptgewinde (16, 32) einen maximalen Hauptgewindeaußendurchmesser (D_{AF}) besitzt und einen Furchbereich (F) und einen in Richtung des Antriebs (12) nachfolgenden Tragbereich (T) aufweist, wobei der Schaft (14) an einem dem Antrieb (12) abgewandten Ende ein Schraubenende (18) aufweist, wobei das Schraubenende (18) einen Durchmesser (D_{E}) von wenigstens 20% des maximalen Hauptgewindeaußendurchmessers (D_{AF}) aufweist der Schaft ferner im Bereich des Schraubenendes (18) ein Ansetzgewinde (20) aufweist, **dadurch gekennzeichnet, dass** das Ansetzgewinde (20) wenigstens drei Ansetzgewindegänge (20a, 20b, 20c) umfasst, die in ihrem Außendurchmesser (D_{AA}) höchstens 90% des maximalen Hauptgewindeaußendurchmessers (D_{AF}) erreichen und einen Ansetzbereich bilden, in welchem die Ansetzgewindegänge (20a, 20b, 20c) den gleichen Durchmesserverlauf aufweisen und zudem im Ansetzbereich (AB) der Durchmesser des Hauptgewindes (16, 32) kleiner ist als der Durchmesser (D_{AA}) der Ansetzgewindegänge (20a, 20b, 20c), wobei das Ansetzgewinde (20) sich höchstens über zwei Windungen erstreckt.

2. Selbstfurchende Schraube nach einem der vorangehenden Ansprüche, **dadurch gekennzeichnet, dass** die Ansetzgewindegänge (20a, 20b, 20c) im Bereich des Schraubenendes (18) am Kern beginnen und ihren Durchmesser stetig erweitern.

3. Selbstfurchende Schraube nach einem der vorangehenden Ansprüche, **dadurch gekennzeichnet, dass** die Gewindegänge (20a, 20b, 20c, 16) mit gleichem Außendurchmesser (D_{AA}, D) im Ansetzbereich (AB) umfänglich gleichverteilt sind.

4. Selbstfurchende Schraube nach einem der vorangehenden Ansprüche, **dadurch gekennzeichnet, dass** der Durchmesser (D_{E}) des Schraubenendes (18) wenigstens 20%, wenigstens 30%, wenigstens 40%, wenigstens 50%, wenigstens 60 % des Hauptgewindeaußendurchmessers (D_{AF}) hat.

5. Selbstfurchende Schraube nach einem der vorangehenden Ansprüche, **dadurch gekennzeichnet, dass** alle Gewindegänge im Ansetzbereich (AB) ihren Anfang in derselben Querschnittsebene haben.

6. Selbstfurchende Schraube nach Anspruch 5, **dadurch gekennzeichnet, dass** alle Gewindegänge (20a, 20b, 16) im Ansetzbereich (AB) die gleiche Gewindegestaltung aufweisen.

7. Selbstfurchende Schraube nach einem der vorangehenden Ansprüche, **dadurch gekennzeichnet, dass** das Ansetzgewinde (20) unmittelbar ans Schraubenende (18) anschließt.

8. Selbstfurchende Schraube nach einem der vorangehenden Ansprüche 1 bis 6, **dadurch gekennzeichnet, dass** das Ansetzgewinde (20) beabstandet zum Schraubenende (18) beginnt.

9. Selbstfurchende Schraube nach einem der vorangehenden Ansprüche, **dadurch gekennzeichnet, dass** das Ansetzgewinde (20) und das Hauptgewinde (16) gewalzte Gewinde sind.

10. Selbstfurchende Schraube nach einem der vorangehenden Ansprüche, **dadurch gekennzeichnet, dass** das Ansetzgewinde (20) und Hauptgewinde (16) im Ansetzbereich (AB) einen stumpferen Flankenwinkel haben als das Hauptgewinde (16) außerhalb des Ansetzbereichs.

11. Selbstfurchende Schraube nach einem der vorangehenden Ansprüche, **dadurch gekennzeichnet, dass** das Ansetzgewinde (20) abrupt ausläuft.

12. Selbstfurchende Schraube nach einem der vorangehenden Ansprüche, **dadurch gekennzeichnet, dass** Unterbrechungen der Gewindegänge vorgesehen sind, wobei der interpolierte Verlauf des Gewindeaußendurchmessers gleichbleibt.

13. Selbstfurchende Schraube nach einem der vorangehenden Ansprüche, **dadurch gekennzeichnet, dass** der maximale Hauptgewindeaußendurchmesser (D_{AF}) im Furchbereich (F) liegt, wobei der Außendurchmesser (D_{AT}) im Tragbereich (T) geringer ist.

14. Selbstfurchende Schraube nach Anspruch 13, **dadurch gekennzeichnet, dass** das Gewindequerschnittsprofil (38) im Bereich des maximalen Hauptgewindeaußendurchmessers (D_{AF}) wenigstens in seinem radial äußeren Bereich (E) des Gewindequerschnittsprofils größer ist als das Gewindequerschnittsprofil (36) im Tragbereich (T) in diesem Bereich (E).

## Claims

1. Self-tapping screw (10, 30) comprising a drive (12) and a threaded shaft (14) comprising a main thread (16, 32), which main thread (16, 32) has a main thread maximum outer diameter (D_{AF}) and includes a thread-forming area (F) and a bearing area (T) following the former in the direction of the drive (12), with the shaft (14) having a screw end (18) at an end facing away from the drive (12), which screw end (18) has a diameter (D_{E}) of at least 20% of the main thread maximum outer diameter (D_{AF}), with the shaft furthermore having a setting thread (20) in the region of the screw end (18), **characterized in that** the setting thread (20) comprises at least three setting thread turns (20a, 20b, 20c), the outside diameter (D_{AA}) of which reaches at most 90% of the main thread maximum outside diameter (D_{AF}) and which form a setting area in which the setting thread turns (20a, 20b, 20c) have the same diameter profile and, moreover, in the setting area (AB) the diameter of the main thread (16, 32) is smaller than the diameter (D_{AA}) of the setting thread turns (20a, 20b, 20c), with the setting thread (20) extending over at most two turns.

2. Self-tapping screw according to any one of the preceding claims, **characterized in that** the setting thread turns (20a, 20b, 20c) start at the core in the region of the screw end (18), with their diameter continuously expanding.

3. Screw according to any one of the preceding claims, **characterized in that** the thread turns (20a, 20b, 20c, 16) having the same outside diameter (D_{AA}) are evenly distributed around the circumference in the setting area (AB).

4. Self-tapping screw according to any one of the preceding claims, **characterized in that** the diameter (D_{E}) of the screw end (18) is at least 20%, at least 30%, at least 40%, at least 50%, at least 60% of the main thread outer diameter (D_{AF}).

5. Self-tapping screw according to any one of the preceding claims, **characterized in that** all thread turns in the setting area (AB) start in the same cross-sectional plane.

6. Self-tapping screw according to any one of the preceding claims, **characterized in that** all the threads (20a, 20b, 16) in the setting area (AB) are of the same thread design.

7. Self-tapping screw according to any one of the preceding claims, **characterized in that** the setting thread (20) directly adjoins the free shaft end (18).

8. Self-tapping screw according to any one of claims 1 to 6 above, **characterized in that** the setting thread (20) starts at a distance from the free shaft end (18).

9. Self-tapping screw according to any one of the preceding claims, **characterized in that** the setting thread (20) and the main thread (16) are rolled threads.

10. Self-tapping screw according to any one of the preceding claims, **characterized in that** the setting thread (20) and the main thread (16) in the setting area (AB) have a more obtuse flank angle than the main thread (16) outside the setting area.

11. Self-tapping screw according to any one of the preceding claims, **characterized in that** the setting thread (20) runs out abruptly.

12. Self-tapping screw according to any one of the preceding claims, **characterized in that** interruptions of the thread turns are provided, with the interpolated course of the thread outer diameter remaining the same.

13. Self-tapping screw according to any one of the preceding claims, **characterized in that** the main thread maximum outer diameter (D_{AF}) is located in the thread-forming area (F), with the outer diameter (D_{AT}) being smaller in the bearing area (T).

14. Self-tapping screw according to claim 13, **characterized in that** the thread cross-sectional profile (38) in the region of the main thread maximum outer diameter (D_{AF}) is larger, at least in its radially outer region (E) of the thread cross-sectional profile, than the thread cross-sectional profile (36) in the bearing area (T) in this region (E).

## Revendications

1. Vis auto-taraudeuse (10, 30) comprenant un entraînement (12) et une tige (14) filetée comprenant un filetage principal (16, 32), dans laquelle le filetage principal (16, 32) possède un diamètre extérieur de filetage principal maximal (D_{AF}) et une zone de sillon (F) et présente une zone de support (T) subséquente dans la direction de l'entraînement (12), dans laquelle la tige (14) présente une extrémité de vis (18) sur une extrémité opposée à l'entraînement (12), dans laquelle l'extrémité de vis (18) présente un diamètre (D_{E}) d'au moins 20 % du diamètre extérieur de filetage principal maximal (D_{AF}), la tige présente en outre dans la zone de l'extrémité de vis (18) un filetage de départ (20), **caractérisée en ce que** le filetage de départ (20) comprend au moins trois pas de filetage de départ (20a, 20b, 20c), qui atteignent dans leur diamètre extérieur (D_{AA}) au plus 90 % du diamètre extérieur de filetage principal maximal (D_{AF}) et forment une zone de départ, dans laquelle les pas de filetage de départ (20a, 20b, 20c) présentent la même étendue de diamètre et en outre dans la zone de départ (AB) le diamètre du filetage principal (16, 32) est inférieur au diamètre (D_{AA}) des pas de filetage de départ (20a, 20b, 20c), dans laquelle le filetage de départ (20) s'étend au plus sur deux spires.

2. Vis auto-taraudeuse selon l'une quelconque des revendications précédentes, **caractérisée en ce que** les pas de filetage de départ (20a, 20b, 20c) commencent dans la zone de l'extrémité de vis (18) sur le noyau et élargissent progressivement leur diamètre.

3. Vis auto-taraudeuse selon l'une quelconque des revendications précédentes, **caractérisée en ce que** les pas de filetage (20a, 20b, 20c, 16) avec le même diamètre extérieur (D_{AA}, D) sont équirépartis sur la périphérie dans la zone de départ (AB).

4. Vis auto-taraudeuse selon l'une quelconque des revendications précédentes, **caractérisée en ce que** le diamètre (D_{E}) de l'extrémité de vis (18) a au moins 20 %, au moins 30 %, au moins 40 %, au moins 50 %, au moins 60 % du diamètre extérieur de filetage principal (D_{AF}).

5. Vis auto-taraudeuse selon l'une quelconque des revendications précédentes, **caractérisée en ce que** tous les pas de filetage dans la zone de départ (AB) ont leur début dans le même plan de section transversale.

6. Vis auto-taraudeuse selon la revendication 5, **caractérisée en ce que** tous les pas de filetage (20a, 20b, 16) dans la zone de départ (AB) présentent la même configuration de filetage.

7. Vis auto-taraudeuse selon l'une quelconque des revendications précédentes, **caractérisée en ce que** le filetage de départ (20) est directement adjacent à l'extrémité de vis (18).

8. Vis auto-taraudeuse selon l'une quelconque des revendications précédentes 1 à 6, **caractérisée en ce que** le filetage de départ (20) commence de manière espacée de l'extrémité de vis (18).

9. Vis auto-taraudeuse selon l'une quelconque des revendications précédentes, **caractérisée en ce que** le filetage de départ (20) et le filetage principal (16) sont des filetages laminés.

10. Vis auto-taraudeuse selon l'une quelconque des revendications précédentes, **caractérisée en ce que** le filetage de départ (20) et le filetage principal (16) ont dans la zone de départ (AB) un angle de filetage plus obtus que le filetage principal (16) à l'extérieur de la zone de départ.

11. Vis auto-taraudeuse selon l'une quelconque des revendications précédentes, **caractérisée en ce que** le filetage de départ (20) s'arrête brusquement.

12. Vis auto-taraudeuse selon l'une quelconque des revendications précédentes, **caractérisée en ce que** des interruptions des pas de filetage sont prévues, dans laquelle le tracé interpolé du diamètre extérieur de filetage reste constant.

13. Vis auto-taraudeuse selon l'une quelconque des revendications précédentes, **caractérisée en ce que** le diamètre extérieur de filetage principal maximal (D_{AF}) se situe dans la zone de sillon (F), dans laquelle le diamètre extérieur (D_{AT}) est moindre dans la zone de support (T).

14. Vis auto-taraudeuse selon la revendication 13, **caractérisée en ce que** le profil de section transversale de filetage (38) dans la zone du diamètre extérieur de filetage principal maximal (D_{AF}) est plus grand au moins dans sa zone (E) radialement extérieure du profil de section transversale de filetage que le profil de section transversale de filetage (36) dans la zone de support (T) dans cette zone (E).
